# FASCICULE DE BREVET EUROPEEN

(11) **EP 2 228 879 B1**
(45) Date de publication et mention de la délivrance du brevet: **09.11.2011**
(21) Numéro de dépôt: 09305229.8
(22) Date de dépôt: 12.03.2009
(51) Int. Cl.: H02G 15/007

(54) **Compteur équipé d'un agencement de fixation d'un câble électrique**
Zähler, der mit einem Befestigungselement für ein Stromkabel ausgestattet ist
Meter equipped with an arrangement for fixing an electric cable

(43) Date de publication de la demande: 15.09.2010
(73) Titulaire: Actaris SAS, 92100 Boulogne Billancourt (FR)
(72) Inventeur: Michaud, Bertrand, 71260 Senozan (FR); Hyvernat, Stéphane, 71570 La Chapelle de Guinchay (FR)
(74) Mandataire: Lenne, Laurence

(56) Documents cités:
- EP-A- 1 564 529
- CA-C- 2 043 647

## Description

L'invention concerne un compteur équipé d'un agencement de fixation d'un câble électrique, en particulier sur un corps d'un compteur pour la liaison du ou des capteurs contenus dans ce corps à une carte électronique d'un calculateur. Un compteur comportant des moyens de fixation d'un câble électrique est connu du document CA-C-2 043 647

Un tel câble doit être fixé sur le corps du compteur, en amont du calculateur, afin d'éviter qu'il soit vrillé ou débranché des capteurs.

Actuellement, généralement, le câble est fixé au moyen d'une bride vissée dans le corps de compteur. Or ce corps est en général métallique, en alliage de cuivre tel que le laiton ou le bronze. Compte tenu des relativement grandes tolérances que présente le corps brut de fonderie, il est nécessaire d'usiner une surface et de réaliser l'orifice taraudé de réception de la vis de fixation de la bride. Ces opérations sont longues et coûteuses. Par ailleurs, pour cette fixation de câble, plusieurs pièces constitutives sont à gérer, à savoir la bride et la vis.

L'invention résout ces problèmes en proposant un agencement de fixation d'un câble électrique, en particulier sur un corps d'un compteur, ne nécessitant aucun usinage particulier du corps du compteur brut de fonderie ou de matriçage.

Pour ce faire, l'invention propose un compteur électronique pourvu d'un câble électrique et comportant un élément support dudit câble, **caractérisé en ce qu'**il comprend une pièce de fixation emboîtée et solidarisée sur une nervure agencée sur ledit élément support, assurant le blocage dudit câble dans une fente agencée dans ladite nervure et comportant deux pattes de pression sur ledit câble de part et d'autre de ladite fente.

L'emboîtement de la pièce de fixation ne nécessite pas de cotes précises de la nervure réalisée sur l'élément support, par exemple le corps du compteur brut de fonderie ou de matriçage. La solidarisation de cette pièce sur la nervure peut être effectuée par divers moyens tel que par exemple le collage, la soudure ou l'encliquetage par déformation de forme.

Le câble est ainsi bloqué dans la fente de la nervure par la pièce de fixation, les deux pattes de pression sur le câble de part et d'autre de ladite fente assurant une déformation du câble en forme de chicane en forme d'Omega et ainsi son blocage sous l'effet d'un effort de traction.

Par ailleurs, cet agencement de fixation est particulièrement rapide et simple à mettre en place et ne nécessite qu'une seule pièce à stocker et à gérer.

Selon un mode de réalisation préféré de l'invention, ladite pièce de fixation est constituée d'une plaque en forme de U encliquetée sur ladite nervure.

Ladite pièce de fixation est avantageusement encliquetée sur ladite nervure au moyen de dents découpées sur les branches du dit U.

De préférence, lesdites pattes de pression sont découpées dans les branches du dit U, sont de longueur supérieure à la longueur de celles-ci et sont inclinées vers l'extérieur du dit U.

Avantageusement, lesdites pattes de pression comportent à leur extrémité libre une encoche de réception du câble.

De préférence, ladite pièce de fixation est en métal.

De préférence, ledit élément support étant un corps de compteur contenant une chambre de mesure et recouvert d'un boîtier, le compteur comprend une partie de blocage portée par ledit boîtier, assurant un appui contre ladite nervure de ladite pièce de fixation.

Cette caractéristique assure un blocage parfait de la pièce de fixation qui ne peut être déplacée même en cas de traction importante sur le câble.

Ladite nervure est de préférence brute, issue directement de la phase de fabrication dudit corps.

L'invention est décrite ci-après à l'aide de figures ne représentant qu'un mode de réalisation préféré de l'invention.

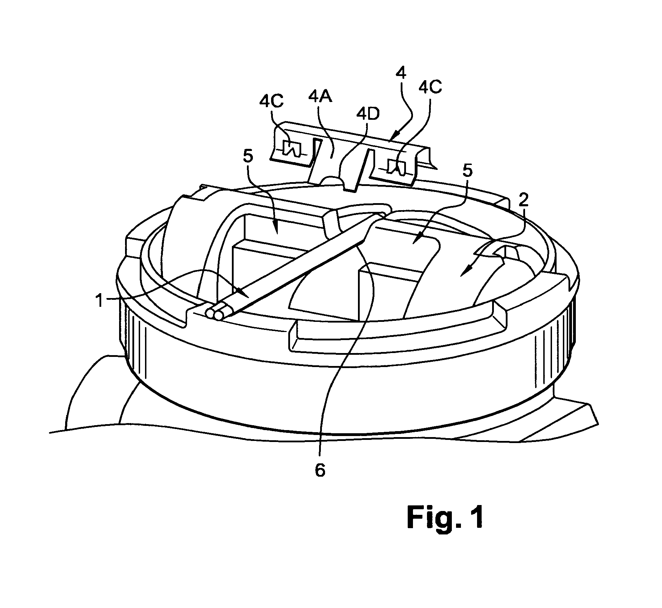

La figure 1 est une vue partielle en perspective d'un compteur d'eau électronique pourvu d'un agencement de fixation conforme à l'invention, non monté.
Les figures 2 et 3 sont des vues partielles en perspective et en coupe d'un compteur d'eau électronique pourvu d'un agencement de fixation conforme à l'invention, monté.

Comme représenté sur les figures, l'agencement de fixation d'un câble électrique 1 dans un compteur électronique, comportant un corps de compteur 2 contenant une chambre de mesure, dans le cas illustré de type statique à ultrasons, et recouvert d'un boîtier 3, comprend une pièce de fixation 4 solidarisée sur une nervure 5 agencée sur le corps, assurant le blocage du câble dans une fente 6 agencée dans la nervure et comportant deux pattes de pression 4A, 4B sur le câble de part et d'autre de cette fente 6.

Cette pièce de fixation 4 est constituée d'une plaque, de préférence métallique, par exemple en acier de ressort ou en acier inoxydable, en forme de U emboîtée sur la nervure 5 du corps 2. Elle est plus précisément encliquetée sur la nervure 5 au moyen de dents 4C découpées sur les branches du U.

Les pattes de pression 4A, 4B sont découpées dans les branches du U, sont de longueur supérieure à la longueur de celles-ci et sont inclinées vers l'extérieur du U. Elles comportent à leur extrémité libre une encoche 4D de réception du câble.

De façon générale, l'inclinaison et la longueur des pattes de pression dépendent des caractéristiques du câble, de sa raideur, de l'état de surface de la gaine et des caractéristiques de la nervure. Ces paramètres permettent de mettre au point le serrage du câble en ajustant les dimensions de la chicane en forme d'Oméga

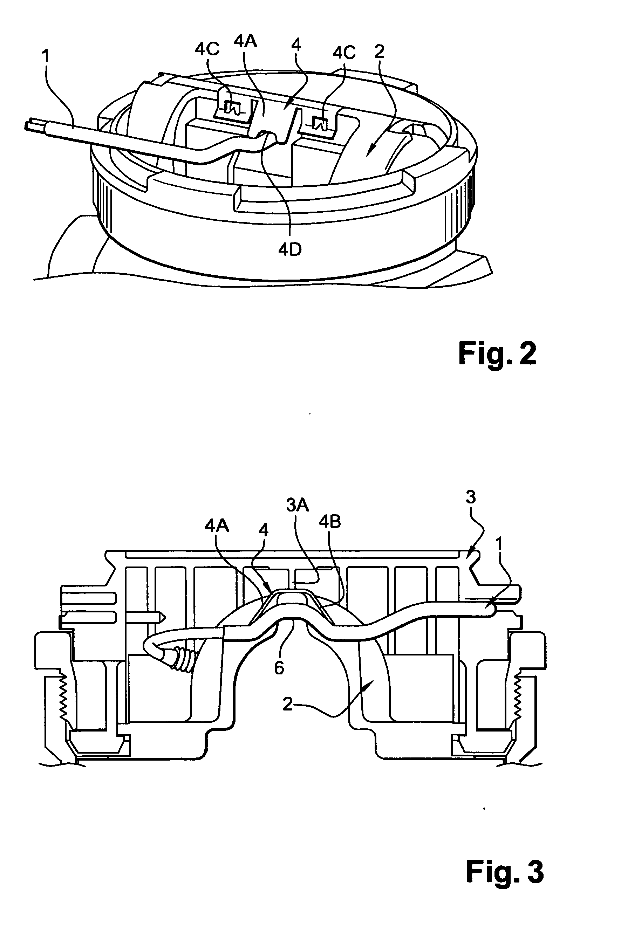

Comme visible sur la figure 3, le boîtier 3 porte par ailleurs une partie de blocage 3A, plus précisément une nervure, portée par le boîtier, assurant un appui contre la nervure 5, de la pièce de fixation 4, une fois le boîtier monté sur le compteur.

## Revendications

1. Compteur électronique pourvu d'un câble électrique (1) et comportant un élément support (2) dudit câble, **caractérisé en ce qu'**il comprend une pièce de fixation (4) emboîtée et solidarisée sur une nervure (5) agencée sur ledit élément support, assurant le blocage dudit câble dans une fente (6) agencée dans ladite nervure et comportant deux pattes de pression (4A, 4B) sur ledit câble de part et d'autre de ladite fente.

2. Compteur selon la revendication précédente, **caractérisé en ce que** ladite pièce de fixation (4) est constituée d'une plaque en forme de U encliquetée sur ladite nervure (5).

3. Compteur selon la revendication précédente, **caractérisé en ce que** ladite pièce de fixation (4) est encliquetée sur ladite nervure (5) au moyen de dents (4C) découpées sur les branches du dit U.

4. Compteur selon l'une des revendications 2 à 4, **caractérisé en ce que** lesdites pattes de pression (4A, 4B) sont découpées dans les branches du dit U, sont de longueur supérieure à la longueur de celles-ci et sont inclinées vers l'extérieur du dit U.

5. Compteur selon la revendication précédente, **caractérisé en ce que** lesdites pattes de pression (4A, 4B) comportent à leur extrémité libre une encoche de réception du câble (4D).

6. Compteur selon l'une des revendications précédentes, **caractérisé en ce que** ladite pièce de fixation (4) est en métal.

7. Compteur selon l'une des revendications précédentes, ledit élément support étant un corps de compteur (2) contenant une chambre de mesure et recouvert d'un boîtier (3), **caractérisé en ce qu'**il comprend une partie de blocage (3A) portée par ledit boîtier, assurant un appui contre ladite nervure (5) de ladite pièce de fixation (4).

8. Compteur selon l'une des revendications précédentes, **caractérisé en ce que** ladite nervure est brute, issue directement de la phase de fabrication dudit corps.

## Claims

1. An electric counter provided with an electric cable (1) and including a supporting element (2) of said cable, **characterized in that** it comprises an attachment part (4) fitted and firmly attached onto a rib (5) laid out on said supporting element, ensuring the blocking of said cable in a slot (6) laid out in said rib and including two pressure tabs (4A, 4B) on said cable on either side of said slot.

2. The counter according to the preceding claim, **characterized in that** said attachment part (4) consists of a U-shaped plate snap-fastened on said rib (5).

3. The counter according to the preceding claim, **characterized in that** said attachment part (4) is snap-fastened onto said rib (5) by means of teeth (4C) cut out on the branches of said U.

4. The counter according to one of claims 2 to 4, **characterized in that** said pressure tabs (4A, 4B) are cut out in the branches of said U, are of a length greater than the length of the latter and are tilted towards the outside of said U.

5. The counter according to the preceding claim, **characterized in that** said pressure tabs (4A, 4B) include at their free end a notch for receiving the cable (4D).

6. The counter according to one of the preceding claims, **characterized in that** said attachment part (4) is in metal.

7. The counter according to one of the preceding claims, said supporting element being a counter body (2) containing a measurement chamber and covered with a casing (3), **characterized in that** it comprises a blocking portion (3A) borne by said casing, ensuring that said attachment part (4) bears against said rib (5).

8. The counter according to one of the preceding claims, **characterized in that** said rib is crude, directly stemming from the phase for manufacturing said body.

## Patentansprüche

1. Elektronischer Zähler, der mit einem Stromkabel (1) ausgestattet ist und ein Stützelement (2) des Kabels aufweist, **dadurch gekennzeichnet, dass** er ein eingerastetes und mit einer auf dem Stützelement ausgebildeten Rippe (5) verbundenes Befestigungselement (4) umfasst, das die Blockierung des Kabels in einem Schlitz (6) gewährleistet, die in die Rippe eingearbeitet ist, und zwei Druckfüße (4A, 4B) auf dem Kabel auf der einen und der anderen Seite des Schlitzes umfasst.

2. Zähler nach vorangehendem Anspruch, **dadurch gekennzeichnet, dass** das Befestigungsteil (4) aus einer U-förmigen Platte besteht, die auf der Rippe (5) eingerastet.

3. Zähler nach vorangehendem Anspruch, **dadurch gekennzeichnet, dass** das Befestigungsteil (4) auf der Rippe (5) mit Hilfe von auf den Armen des U ausgeschnittenen Zähnen (4C) eingerastet.

4. Zähler nach einem der Ansprüche 2 bis 4, **dadurch gekennzeichnet, dass** die Druckfüße (4A, 4B), die in den Armen des U ausgeschnitten sind, länger als dieselben und im Verhältnis zum U nach außen geneigt sind.

5. Zähler nach vorangehendem Anspruch, **dadurch gekennzeichnet, dass** die Druckfüße (4A, 4B) an ihrem freien Ende eine Kabelaufnahmenut (4D) aufweisen.

6. Zähler nach einem der vorangehenden Ansprüche, **dadurch gekennzeichnet, dass** das Befestigungsteil (4) aus Metall ist.

7. Zähler nach einem der vorangehenden Ansprüche, wobei das Stützelement ein Zählerkörper (2) ist, der eine Messkammer enthält und von einem Gehäuse (3) bedeckt ist, **dadurch gekennzeichnet, dass** er einen von dem Gehäuse getragenen Blockierabschnitt (3A) umfasst, der eine Abstützung gegen die Rippe (5) des Befestigungsteils (4) gewährleistet.

8. Zähler nach einem der vorangehenden Ansprüche, **dadurch gekennzeichnet, dass** die Rippe unbearbeitet und direkt aus der Herstellungsphase des Körpers hervorgegangen ist.
